# EUROPÄISCHE PATENTSCHRIFT

(11) **EP 3 416 803 B1**
(45) Veröffentlichungstag und Bekanntmachung des Hinweises auf die Patenterteilung: **06.01.2021**
(21) Anmeldenummer: 16801709.3
(22) Anmeldetag: 18.11.2016
(51) Int. Cl.: B29C 49/42, B29L 31/00, B65G 47/86, B65C 1/00, B67C 3/00

(54) **ZANGENANORDNUNG FÜR DIE HANDHABUNG VON VORFORMLINGEN UND TRANSFERRAD UND BEHÄLTERBEHANDLUNGSMASCHINE MIT EINER SOLCHEN ZANGENANORDNUNG**
TONG ASSEMBLY FOR HANDLING PREFORMS, AND TRANSFER WHEEL AND CONTAINER TREATMENT MACHINE COMPRISING SUCH A TONGS ARRANGEMENT
DISPOSITION À PINCES POUR LA MANIPULATION DE PRÉFORMES ET ROUE DE TRANSFERT ET MACHINE DE TRAITEMENT DE RÉCIPIENTS PRÉSENTANT UNE TELLE DISPOSITION À PINCES

(30) Priorität: 16.02.2016 DE 102016001755
(43) Veröffentlichungstag der Anmeldung: 26.12.2018
(73) Patentinhaber: KHS Corpoplast GmbH, 22145 Hamburg (DE)
(72) Erfinder: KLATT, Dieter, 22147 Hamburg (DE); BAUMGARTE, Rolf, 22926 Ahrensburg (DE); MEYER, Jan Fabian, 22337 Hamburg (DE)
(74) Vertreter: Meissner Bolte Partnerschaft mbB
(86) Internationale Anmeldenummer: PCT/EP2016/001921
(87) Internationale Veröffentlichungsnummer: WO 2017/140330

(56) Entgegenhaltungen:
- EP-A1- 1 375 395
- EP-A1- 1 445 090
- WO-A1-03/078285
- DE-A1- 19 740 892
- DE-U1- 29 901 545
- US-A1- 2014 291 909

## Beschreibung

Die Erfindung betrifft eine Zangenanordnung für die Handhabung von Vorformlingen aus einem thermoplastischen Material oder von daraus hergestellten Behältern, mit einer Zangenbasis mit wenigstens zwei daran schwenkbar befestigten Zangenarmen sowie mit einem die Zangenbasis tragenden Zangenträger. Zangenanordnungen gemäß dem Stand der Technik sind in den Dokumenten EP1375395A1, DE19740892A1, WO03/078285A1, DE29901545U1, US2014/291909A1 und EP1445090A1 beschrieben.

Die Erfindung betrifft darüber hinaus ein Transferrad zur Handhabung von Vorformlingen aus einem thermoplastischen Material oder von daraus hergestellten Behältern, mit wenigstens einem Tragarm und mit wenigstens einer an dem Tragarm oder an den Tragarmen befestigten Zangenanordnung. Schließlich betrifft die Erfindung eine Behälterbehandlungsmaschine mit einem solchen Transferrad. Solche Behälterbehandlungsmaschinen sind zum Beispiel Blasmaschinen, Beschichtungsmaschinen, Etikettiermaschinen, Füller oder andere Maschinen, die im Zusammenhang mit der Behandlung oder Bearbeitung von Vorformlingen oder von aus Vorformlingen hergestellten Behältern Verwendung finden. Eine Behälterbehandlungsmaschine kann auch aus mehreren der vorstehend genannten Maschinen zusammengesetzt sein, zum Beispiel in verblockter Bauweise.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor mittels der Heizeinrichtung temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE 43 40 291 erläutert. Die einleitend erwähnte Einleitung des unter Druck stehenden Gases umfasst auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE 42 12 583 beschrieben. Möglichkeiten zur Temperierung der Vorformlinge werden in der DE 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen. Greifzangen und sonstige Zangenanordnungen, bestehend aus einer Zangenbasis und aus in der Regel daran schwenkbar befestigten Zangenarmen sowie aus einem die Zangenbasis tragenden Zangenträger, greifen in der Regel von außen an den Vorformling bzw. an den Behälter an. Häufig wird zum Zwecke des Angreifens der Neckring des Vorformlings bzw. des Behälters verwendet. Zangenanordnungen haben den Vorteil, dass der Mündungsbereich des Vorformlinges bzw. des Behälters frei zugänglich bleibt, zum Beispiel um Behandlungsorgane in den Vorformling einzuführen oder um Behandlungsorgane auf den Mündungsbereich aufzusetzen.

Eine Handhabung von Behältern unter Verwendung von Übergaberädern wird beispielsweise in der DE 199 06 438 bei einer Anordnung des Übergaberades zwischen einem Blasrad und einer Ausgabestrecke beschrieben. Übergaberäder, die auch als Transferräder bezeichnet werden, weisen in der Regel mehrere Tragarme auf, die Handhabungseinrichtungen tragen. Solche Transferräder sind zum Beispiel eingangsseitig einer Blasmaschine und auch ausgangsseitig einer Blasmaschine angeordnet. Solche Transferräder sind zum Beispiel auch angeordnet zwischen unterschiedlichen Behälterbehandlungsmaschinen, um den Transfer von einer ersten Behälterbehandlungsmaschine zu einer zweiten Behälterbehandlungsmaschine zu realisieren. Solche Transferräder können aber auch innerhalb einer Behälterbehandlungsmaschine angeordnet sein, zum Beispiel um Vorformlinge oder daraus hergestellte Behälter von einer Behandlungsstation zu einer nächsten Behandlungsstation zu transferieren, z.B. von einer Heizeinrichtung zu einer Blaseinrichtung. Denkbar ist auch, dass diese Transferräder mit einer über den Transport hinausgehenden Funktion ausgestattet sind. So können zum Beispiel auf dem Transferrad Ausschleusmittel angeordnet sein, um als fehlerhaft von Inspektionsmitteln ermittelte Vorformlinge oder daraus hergestellte Behälter auszuschleusen. Es können auf diesen Transferrädern auch Messmittel angeordnet sein, um basierend auf den davon durchgeführten Messungen die Steuerung der Behandlungsmaschine vorzunehmen. Zum Beispiel könnten Wanddickenmessmittel oder Temperaturmessmittel vorgesehen sein oder beliebige andere Messmittel, die eine Eigenschaft des Vorformlings oder des daraus hergestellten Behälters erfassen und die erfassten Werte einer Steuerungseinheit zum Zwecke der Maschinensteuerung und/oder zum Zwecke der Blasprozesssteuerung zuzuführen.

Die bereits erläuterte Handhabung der Vorformlinge erfolgt zum einen bei den sogenannten Zweistufenverfahren, bei denen die Vorformlinge zunächst in einem Spritzgussverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgusstechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorformlinge typischerweise auf Transportdorne aufgesteckt, die den Vorformling entweder durch die gesamte Blasmaschine transportieren oder die lediglich im Bereich der Heizeinrichtung umlaufen. Bei einer stehenden Beheizung der Vorformlinge derart, dass die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen.

Im Bereich der Heizstrecke besteht eine typische Anforderung darin, in einer Umfangsrichtung der Vorformlinge eine gleichmäßige Temperierung zu erreichen. Bei einer Spezialanwendung, dem sogenannten Preferential Heating, besteht hingegen eine Anforderung darin, eine exakt definierte ungleichmäßige Temperaturverteilung in einer Umfangsrichtung der Vorformlinge vorzugeben. Ein derartiges Verfahren wird beispielsweise angewendet, wenn Behälter hergestellt werden sollen, deren Querschnitt von einer kreisrunden Form abweicht. Die Abweichung kann beispielsweise darin bestehen, Behälter mit ovalem Querschnitt oder beispielsweise mit dreieckigem oder viereckigem Querschnitt zu produzieren.

Die Herstellung derartiger unrunder Behälter wird bereits in der US 3,775,524 beschrieben. Es erfolgt dort zunächst eine symmetrische Temperierung der Vorformlinge, anschließend wird die Temperatur in ausgewählten Bereichen selektiv erhöht. Weitere Varianten zur Herstellung von Temperaturprofilen in Umfangsrichtung des Vorformlings werden in der US 3,632,713, der US 3,950,459 sowie der US 3,892,830 beschrieben. Eine Temperaturkonditionierung durch selektive Abschattung wird in der DE 33 14 106 angegeben.

Aus der US 5,292,243 ist es bekannt, gleichzeitig zwei Vorformlinge einer Temperaturkonditionierung in Umfangsrichtung zu unterziehen. In der EP 0 620 099 findet sich eine Zusammenstellung von aus dem Stand der Technik bekannten Verfahren zur Temperaturkonditionierung von Vorformlingen.

Insbesondere wird in dieser Druckschrift auch erläutert, den Vorformling derart an einer abwechselnden Anordnung von Heizelementen und kühlen Bereichen vorbeizuführen, daß durch eine Koordinierung der Abstände und der Ausdehnungen der jeweiligen Heizeinrichtungen mit der Translationsgeschwindigkeit und der Rotationsgeschwindigkeit der vorbeigeführten Vorformlinge das gewünschte Temperaturprofil bereitgestellt wird. Eine derartige Anordnung erfordert jedoch eine große räumliche Ausdehnung, es müssen eine Vielzahl von Parametern exakt aufeinander abgestimmt werden und eine Anpassung an unterschiedliche Produktanforderungen erweist sich als äußerst aufwendig.

In der DE 196 08 570 wird ein Verfahren beschrieben, bei dem durch eine schrittartige Drehung der mit dem Temperaturprofil zu versehenden Vorformlinge eine vereinfachte konstruktive Realisierung ermöglicht wird. In der DE 197 57 818 werden ein Verfahren und eine Vorrichtung erläutert, bei denen die Vorformlinge von Tragelementen gehaltert sind, die über Kurvenrollen entlang einer Kurvenbahn koordiniert um ihre jeweiligen Längsachsen herum verschwenkt werden können und hierdurch die Aufbringung eines Temperaturprofils in Umfangrichtung unterstützen. Eine derartige Vorrichtung eignet sich besonders für die Temperierung einer großen Anzahl von Vorformlingen je Heizeinheit. Auch hier werden durch Änderungen der Produktanforderungen aber relativ hohe Änderungsaufwendungen verursacht.

Zur Unterstützung der beiden genannten möglichen Anforderungen an die Temperierung von Vorformlingen, nämlich einerseits in einer Umfangsrichtung der Vorformlinge eine gleichmäßige Temperierung zu erreichen und andererseits für andere Anwendungen (Preferential Heating) eine exakt definierte ungleichmäßige Temperaturverteilung in einer Umfangsrichtung der Vorformlinge vorzugeben, erweist es sich als zweckmäßig, die Vorformlinge entlang ihres Transportweges durch die Heizstrecke hindurch in eine Rotation um ihre Längsachse zu versetzen. Diese Rotation kann zur Unterstützung einer gleichmäßigen Temperaturverteilung gleichmäßig oder zur Unterstützung der Generierung eines vorgegebenen Wärmeprofils definiert ungleichmäßig sein.

Eine Möglichkeit zur Einbringung derartiger Rotationsbewegungen in die Vorformlinge besteht darin, ein Tragelement für die Vorformlinge mit einem Zahnrad zu versehen, das in einer Kette abrollt, die sich entlang des Transportweges des Vorformlinges erstreckt. Eine derartige Kette kann unbeweglich angeordnet sein, so dass die Umfangsgeschwindigkeit der Vorformlinge direkt von deren Translationsgeschwindigkeit abhängt. Es ist aber ebenfalls bereits bekannt, eine derartige Kette mit einem Antrieb zu versehen, so dass die Kette entlang von Führungselementen umläuft.

Bei derartigen Ketten erfolgt eine Verlegung der Ketten typischerweise derart, dass ein Kettenvorlauf außenseitig entlang des Transportweges der Vorformlinge angeordnet ist und dass sich noch weiter außen liegend ein Rücklauf der Kette erstreckt. Die Hinlauf- und Rücklaufwege der Kette spannen hierdurch eine hufeisenförmige Grundstruktur auf, die die Heizstrecke im Wesentlichen hufeisenförmig auf drei Seiten umgibt, wobei dieses Hufeisen in Richtung auf das mit der Heizstrecke versehene Blasmodul offen ist. Diese hufeisenförmige Grundstruktur ermöglicht eine Zuführung und Ableitung der Vorformlinge in das Heizmodul hinein bzw. vom Heizmodul weg ohne Beschränkungen des Bewegungsbereiches.

Die im wesentlichen relativ zueinander parallele Verlegung des Hinlaufbereiches und des Rücklaufbereiches der Kette verursacht jedoch eine Kettenlänge, die einschließlich der erforderlichen Umlenkungen mehr als doppelt so groß ist, wie der eigentliche Nutzbereich, in dem ein Kontakt mit den Zahnrädern der Tragelemente stattfindet. Dies hat entsprechende Kosten für die Kette zur Folge, insbesondere resultiert jedoch ein entsprechendes Kettengewicht, das die dynamischen Eigenschaften des Gesamtsystems beeinträchtigt.

Eine davon abweichende Kettenführung zeigt die DE 10 2007 016 027 A1. Hier ist die Kette derart verlegt, dass sie in einem geschlossenen Umlauf entlang der Heizstrecke geführt wird. Die Kettenlänge wird auf diese Weise reduziert.

Die wie vorstehend mit einem Temperaturprofil in Umfangsrichtung versehenen Vorformlinge (Preferential Heating) müssen am Ende der durchlaufenen Heizstrecke in die Blasformen übergeben werden. Bei dieser Übergabe müssen die Vorformlinge in einer definierten Orientierung übergeben werden, da die stärker erwärmten Umfangsbereiche des Vorformlinges in bestimmter Weise zu der Blasform ausgerichtet sein müssen. Zur Erreichung dieses Zweckes sind im Stand der Technik unterschiedliche Lösungen offenbart. So erläutert zum Beispiel die WO 97/32713, dass Vorformlinge mit Markierungen versehen sein können. Es wird erläutert, dass es für die spätere Handhabung der geblasenen unrunden Behälter von Vorteil sein kann, wenn die Behälter detektierbare Markierungen bzw. mechanisch erfassbare Strukturen aufweisen. Es werden verschiedene Beispiele für Markierungen angegeben, zum Beispiel bei einer optischen Erfassung der Rotationsorientierung. Für die mechanische Erfassung der Rotationsorientierung werden weitere Beispiele angegeben. Aufgabe dieser Markierungen ist jeweils, dass bei der Behälterherstellung sowie bei der Temperierung der Vorformlinge jeweils vorgegebene Positionen eingenommen werden, sodass während des gesamten Herstellungsvorganges sowie bei den späteren Handhabungen exakt bekannte Rotationsorientierungen der Vorformlinge, möglicher Zwischenprodukte sowie der geblasenen Behälter vorliegen. Rotationsorientierung bezieht sich dabei jeweils auf die eingenommene Stellung nach einer Drehung um die Längsachse des Vorformlinmgs bzw. des daraus geblasenen Behälters.

Die DE 197 57 818 A1 offenbart zu der Rotationsorientierung, dass an einem Transportdorn ein Orientierungsstift ausgebildet ist, der mit Führungsschienen zusammenwirkt. Der von dem Transportdorn transportierte Vorformling wird auf diese Weise in eine definierte Rotationsorientierung gebracht. Aufgrund der rotationsfesten Verbindung zwischen dem Transportdorn und dem davon gehaltenen Vorformling ist mit der Rotationsorientierung des Transportdornes auch die Rotationsorientierung des Vorformlings gewährleistet.

Die vorgenannten Maßnahmen zur Rotationsorientierung eines Vorformlinges weisen noch Nachteile auf. So ist zum Beispiel das Vorsehen eines Orientierungsstiftes an einem Dorn für solche Handhabungsvorgänge ungeeignet, bei denen kein Dorn verwendet wird. Das Vorsehen von optischen oder mechanischen oder auf andere Weise detektierbaren Markierungen an einem Vorformling erfordert einen erheblichen Detektions- und Steuerungsaufwand sowie eine entsprechende Anpassung der verwendeten Vorformlinge.

Aufgabe der vorliegenden Erfindung ist es, ein Verfahren der einleitend genannten Art derart zu verbessern, dass mit geringem maschinenbaulichen Aufwand eine qualitativ hochwertige Beheizung unterstützt wird. Aufgabe der vorliegenden Erfindung ist es insbesondere, eine Rotationsorientierung eines Vorformlinges oder eines daraus hergestellten Behälters bei der Übergabe mittels Zangenanordnungen zu unterstützen.

Diese Aufgabe wird erfindungsgemäß dadurch gelöst, dass die Zangenbasis mittels eines Viergelenks mit dem Zangenträger verbunden ist. Die Zangenbasis und der Zangenträger sind als jeweils gegenüberliegende Schenkel des Viergelenks angeordnet und ausgebildet. Das Viergelenk wird komplettiert durch zwei sich gegenüberliegende Schwenkarme, die jeweils von der Zangenbasis zum Zangenträger verlaufen, wobei diese zwei Schwenkarme bevorzugt eine gleiche Länge aufweisen.

Weitere Aufgabe der vorliegenden Erfindung ist es, ein Transferrad und eine Behandlungsmaschine anzugeben, die Verbesserungen bei der Rotationsorientierung von Vorformlingen oder von daraus hergestellten Behältern erbringen.

Diese Aufgabe wird erfindungsgemäß dadurch gelöst, dass das Transferrad wenigstens einen Tragarm mit einer erfindungsgemäßen Zangenanordnung aufweist. Bezüglich der Behandlungsmaschine wird die Aufgabe dadurch gelöst, dass die Behandlungsmaschine wenigstens ein erfindungsgemäßes Transferrad aufweist.

Erfindungsgemäß ist vorgesehen, dass die Zangenbasis mittels eines Viergelenks mit dem Zangenträger verbunden ist. Unter einem Viergelenk wird ein Koppelgetriebe verstanden bestehend aus vier Schenkeln und vier Schwenkachsen, wobei jeweils zwei Schenkel an einer Schwenkachse schwenkbar miteinander verbunden sind. Gemäß der vorliegenden Erfindung befinden sich zwei dieser Schwenkachsen an der Zangenbasis und zwei Schwenkachsen befinden sich am Zangenträger. Der Zangenträger und die Zangenbasis sind durch zwei Schenkel miteinander verbunden. Der Zangenträger und die Zangenbasis bilden die beiden übrigen Schenkel zur Komplettierung des Viergelenks.

Diese genannte Konstruktion bietet den Vorteil, dass über eine Schwenkbewegung der beiden die Zangenbasis und den Zangenträger verbindenden Schwenkarme eine exakte Bewegung der an der Zangenbasis angelenkten Zangenarme ausführbar ist und somit eine exakte Bewegung des von den Zangenarmen gehaltenen Werkstückes (Vorformling, Behälter). Es kann sich bei dieser Bewegung des Werkstückes um translatorische oder rotatorische Bewegungen oder Kombinationen daraus handeln.

Mit Vorteil bilden die Zangenbasis und der Zangenträger jeweils gegenüberliegende Schenkel des Viergelenks. Weiterhin ist mit Vorteil vorgesehen, dass das Viergelenk durch zwei weitere Schwenkarme komplettiert ist, insbesondere durch solche gleicher Länge. Gleichlange Schwenkarme bieten den Vorteil einfacher Bewegungsmuster bei Ausführung von Schwenkbewegungen. Insbesondere ist es auf diese Weise möglich, dass die Zangenanordnung über eine Schwenkbewegung der Schwenkarme eine Drehung des von der Zangenanordnung gehaltenen Werkstückes (Vorformling, Behälter) ausführt, ohne dass das Werkstück in den jeweiligen Endpositionen der Schwenkbewegung der Zangenanordnung ortsverändert ist. Ein z.B. um eine Längsachse drehsymmetrisches Werkstück, wie dies typischerweise bei Vorformlingen und daraus hergestellten Behältern der Fall ist, kann also durch Ausführung einer Schwenkbewegung der Schwenkarme gedreht werden und dabei kann die Längsachse des Werkstückes vor Ausführung der Schwenkbewegung und nach Beendigung der Schwenkbewegung am gleichen Ort liegen. In der Zwischenphase der Schwenkbewegung der Zangenanordnung, nämlich in der Bewegungsphase nach Verlassen der Ausgangsposition bei Beginn der Schwenkbewegung und vor Erreichen der Endposition der Schwenkbewegung, kann sich die Längsachse des Werkstückes allerdings im Raum bewegen. Die obigen Betrachtungen zur Ortsfestigkeit beziehen sich auf die Relativposition zum Zangenträger, der selber natürlich in der Regel eine Bewegung ausführt, da er z.B. auf einem Übergaberad angeordnet ist. Entsprechend wäre eine rotierende Bewegung des Übergaberades der oben geschilderten Schwenkbewegung und auch der Rotationsbewegung des Werkstückes überlagert. Ein mit und auf dem dem Zangenträger bewegter Beobachter würde aber beobachten, dass die Längsachse des Werkstückes vor und nach der Schwenkbewegung am gleichen Ort liegt.

Es sind für das Erreichen bestimmter Bewegungsmuster einfache geometrische Überlegungen zu den Längen der Schwenkachsen, zu den Längen der Zangenarme und zum Schwenkwinkel anzustellen und so aufeinander abzustimmen, dass das gewünschte Bewegungsmuster ausgeführt wird. Insbesondere gilt dies für die als vorteilhaft geschilderte Ausführungsvariante der Rotation des Vorformlings um seine Längsachse unter Beibehaltung der Ortslage der Längsachse des Werkstückes in der Anfangs- und Endposition der Schwenkbewegung. Eine solche Ausführungsvariante der Zangenanordnung macht Übergabevorgänge besonders einfach, weil sich der Übergabepunkt des Werkstückes nicht dadurch verändert, dass die besagte Schwenkbewegung ausgeführt wird. Die Zangenanordnung kann also ohne aufwendige Umrüstarbeiten sowohl bei prefential heating eingesetzt werden als auch bei Vorformlingen, die gleichmäßig temperiert werden. Im letzteren Fall kann die Schwenkbewegung der Zangenanordnung z.B. auch unterbleiben. Die Übergabe wäre dadurch in keiner Weise beeinflusst, da wie oben erläutert der Übergabepunkt bei geeigneter Wahl der Längen- und Schwenkwinkelverhältnisse des Viergelenks fest bleiben kann.

Bei der geschilderten bevorzugten Ausführungsvariante definieren die von der Zangenbasis gehaltenen Zangenarme und der von den Zangenarmen gehaltene Vorformling eine Drehsymmetrieachse des Vorformlinges, der mittig zwischen den Zangenarmen angeordnet ist. Die Länge der Schwenkarme ist dabei definiert als der Abstand zwischen zwei Schwenkachsen des Viergelenks. Die Vorformlingslängsachse oder auch die Behälterlängsachse verschiebt sich während des Schwenkens des Viergelenkes relativ zum Zangenträger. Bei der bevorzugten Wahl der Schwenkarme mit gleicher Länge und bei Vorsehen symmetrischer Endpunkte für das Verschwenken des Viergelenkes um eine Symmetrieachse des Zangenträgers ist allerdings der Vorformlingsmittelpunkt in beiden Endpunkten in einem gleichen Abstand zum Zangenträger. Auf diese Weise wird eine reine Drehbewegung des Vorformlings um seine Längsachse ausgeführt, während der Vorformlingsmittelpunkt bei beiden Endpunkten der Schwenkbewegung ortsfest relativ zum Zangenträger verbleibt. Eine Verschiebung des Vorformlingsmittelpunktes ergibt sich lediglich in den Bewegungsphasen zwischen dem Erreichen der Endpunkte. Vorformlingsmittelpunkt und Längsachse des Vorformlings werden hier synonym in dem Sinne verwendet, dass der Vorformlingsmittelpunkt die Lage des Schnittpunkts der Längsachse des Vorformlings mit der durch die rotierenden Zangenarme aufgespannten Ebene angibt.

Mit Vorteil ist vorgesehen, dass die Zangenanordnung wenigstens einen Anschlag zur einseitigen Begrenzung einer Schwenkbewegung des Viergelenks aufweist zur Vorgabe einer definierten Sollposition der Zangenarme. Das Vorsehen eines solchen Anschlages ist technisch einfach zu realisieren und sorgt für eine exakte Reproduzierbarkeit der Bewegung.

Mit Vorteil weist die Zangenanordnung eine Rückstellsicherung auf zum Halten des Viergelenkes in der Anschlagposition, wobei diese Rückstellsicherung insbesondere als Magnet und/oder als Kniehebel z.B. in Übertotpunktlage ausgebildet sein kann. Es wird dadurch in konstruktiv einfacher Weise sichergestellt, dass keine unbeabsichtigte Schwenkbewegung der Zangenanordnung ausgeführt wird.

Eine weitere Verbesserung der Reproduzierbarkeit und Exaktheit der Bewegung der Zangenanordnung ist dadurch erreichbar, dass die Zangenanordnung einen beidseitigen Anschlag oder zwei einseitige Anschläge aufweist zur Vorgabe von zwei definierten Sollpositionen der Zangenarme. Bei diesen Sollpositionen handelt es sich regelmäßig um die Ausgangs- und die Endposition der Schwenkbewegung des Viergelenks.

Mit Vorteil sind die Zangenbasis und der Zangenträger unterschiedlich lang ausgebildet, weil dadurch in einfacher Weise eine Drehbewegung der Zangenbasis und der daran angelenkten Zangenarme relativ zum Zangenträger realisiert werden kann. Anderenfalls wäre dafür eine aufwendigere Kinematik vorzusehen, um die Zangenarme während der Verschwenkung des Viergelenkes relativ zur Zangenbasis zu Verschwenken.

Mit Vorteil ist dabei die Zangenbasis kürzer als der Zangenträger ausgebildet. Damit ist gemeint, dass der Abstand der Schwenkachsen auf der Zangenbasis kleiner ist als der Abstand der Schwenkachsen auf dem Zangenträger, z.B. gemessen von der jeweiligen geometrischen Schwenkachsenlage, also der Lage derjenigen geometrischen Achse, um die herum geschwenkt wird. Diese geometrische Achsenlage ist in der Regel identisch mit der tatsächlichen Lage der Schwenkachsen. Der Vorteil dieser Dimensionierungswahl besteht darin, dass die Schwenkrichtung des Viergelenkes und die Drehrichtung der Zangenbasis dadurch gegenläufig sind. Es kann dadurch eine in sich selbst zurückgeführte Bewegung des Vorformlingsmittelpunktes erfolgen, womit gemeint ist, dass im Ausgangs- und im Endpunkt der Schwenkbewegung die Längsachse des Vorformlings bzw. des Behälters an der gleichen Stelle liegt relativ zum Zangenträger.

Eine einfache konstruktive Umsetzung der Zangenanordnung erfolgt dadurch, dass die Schwenkachsen der Zangenarme von den Schwenkachsen des Viergelenks auf der Zangenbasis gebildet sind. Dies reduziert die Anzahl der vorzusehenden Schwenkachsen.

Bezüglich der Steuerung der Zangenanordnung sind im Stand der Technik verschiedene Alternativen bekannt. Bevorzugt ist die Zangenanordnung kurvengesteuert ausgeführt, wodurch ein hoher Grad an Exaktheit, Reproduzierbarkeit und Zuverlässigkeit erreicht wird. Die Zangenanordnung weist dazu ein Steuerelement auf, insbesondere einen Abnehmer, z.B. eine Kurvenrolle, für das Zusammenwirken mit einer externen Kurvensteuerung, insbesondere mit einer externen Steuerkurve, wobei die Schwenkbewegung des Viergelenks wenigstens in einer Richtung kurvengesteuert ausführbar ist. Denkbar ist auch eine beidseitig wirkende Kurvensteuerung, um die Bewegungsexaktheit weiter zu erhöhen.

Wenn keine beidseitig wirkende Kurvensteuerung vorgesehen ist erfolgt die Ausführung einer Schwenkbewegung des Viergelenks in der anderen Richtung, nämlich zurück von der End- in die Ausgangsposition, mit Vorteil mittels einer Rückstellvorrichtung, die insbesondere als Feder ausgebildet sein kann. In Alternative dazu kann die Zangenanordnung auch zur kurvengesteuerten Ausführung einer Schwenkbewegung des Viergelenks in der anderen Richtung ausgebildet sein.

Die Erfindung kann mit Vorteil auf einem Transferrad zur Handhabung von Vorformlingen aus einem thermoplastischen Material oder von daraus hergestellten Behältern eingesetzt werden, mit wenigstens einem Tragarm und mit wenigstens einer an dem Tragarm befestigten erfindungsgemäßen Zangenanordnung. Weiterhin kann die Erfindung bevorzugt in einer Behälterbehandlungsmaschine, insbesondere in einer Blasmaschine und/oder Beschichtungsmaschine und/oder Etikettiermaschine und/oder Füller, mit einem erfindungsgemäßen Transferrad verwirklicht werden. Die Vorteile ergeben sich dabei aus den genannten Vorteilen der Zangenanordnung.

In den Zeichnungen sind Ausführungsbeispiele der Erfindung schematisch dargestellt. Es zeigen:
- Fig. 1: eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5a, 5b, 5c, 5d: verschiedene Ansichten zu einem ersten Ausführungsbeispiel zu einer erfindungsgemäßen Zangenanordnung, und
- Fig. 6a, 6b, 6c, 6d: verschiedene Ansichten zu einem zweiten Ausführungsbeispiel zu einer erfindungsgemäßen Zangenanordnung.

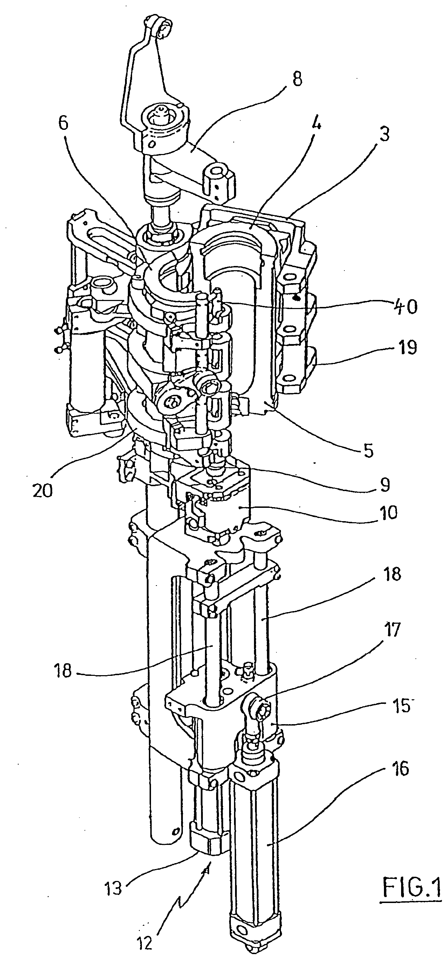

Die Figuren 1 bis 4 erläutern ohne Beschränkung der Allgemeinheit der Zangenanordnung und der Verwendungsmöglichkeiten der Zangenanordnung für weitere Behandlungsmaschinen für Vorformlinge und/oder für Berhälter einen typischen Anwendungsfall im Bereich einer Blasmaschine anhand eines Ausführungsbeispiels für eine Blasmaschine.

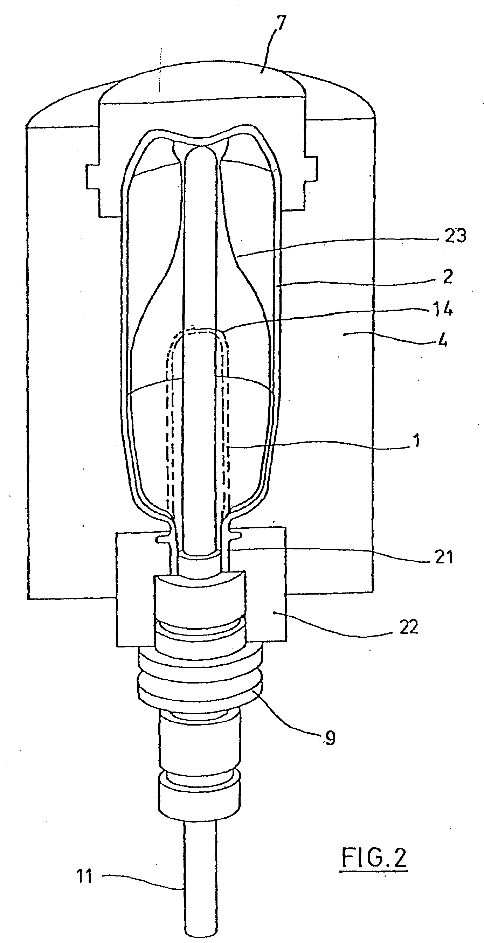

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im Wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und aus einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen. Insbesondere kann dies ohne Verwendung eines Transportdornes erfolgen, sondern mit einer erfindungsgemäßen Zangenanordnung.

Zur Ermöglichung einer Druckluftzuleitung ist unterhalb des Transportdornes (9) ein Anschlusskolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, dass eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, dass von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedruckt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

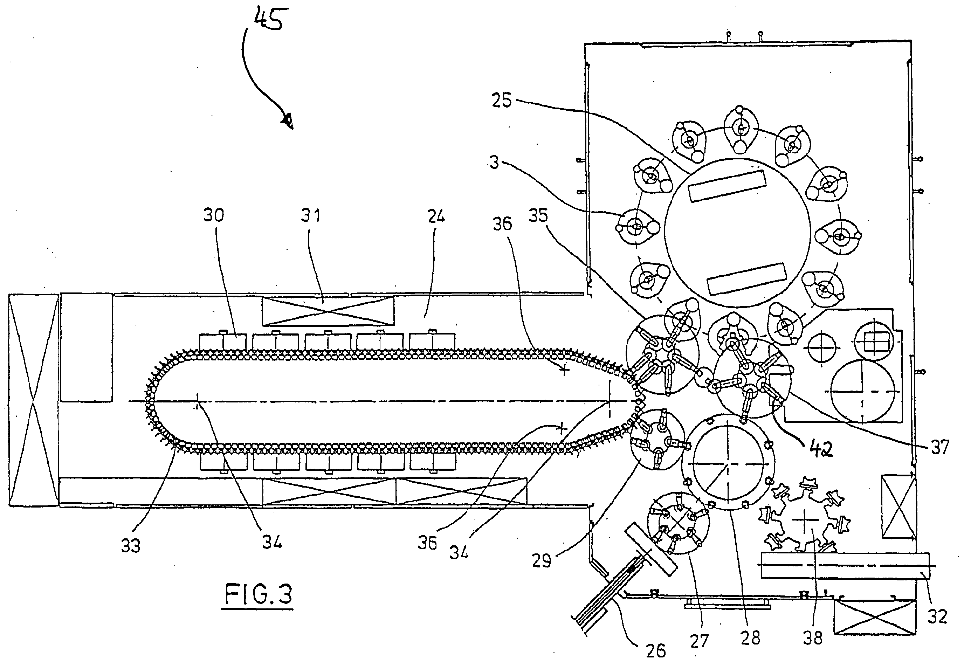

Fig. 3 zeigt den grundsätzlichen Aufbau eines Beispieles einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, dass der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei dem dargestellten Ausführungsbeispiel die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im Wesentlichen rechteckförmige Grundkontur aufzuspannen. Bei dem dargestellten Ausführungsbeispiel werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

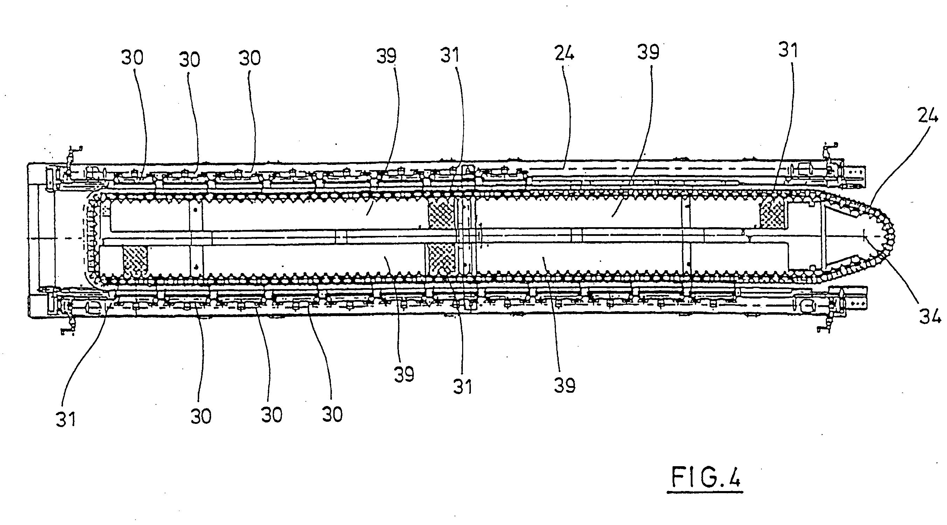

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im Wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren. Für die Erfindung spielt die konkrete Ausbildung der Heizstrecke und der verwendeten Heizstrahler und/oder Kühlgebläse aber keine wesentliche Rolle, sondern kann aus den im Stand der Technik bekannten Konstruktionen ausgewählt werden. Kühlgebläse können z.B. bedarfsweise auch fehlen.

Die in der Fig. 3 gezeigten Übergaberäder (27), (28), (29) sowie das Eingaberad (35), das Entnahmerad (37) und das Ausgaberad (38) weisen Trageinrichtungen auf, um Vorformlinge oder aus Vorformlingen hergestellte Behälter handhaben zu können. Nachfolgend sollen erfindungsgemäße Ausführungsbeispiele von solchen Trageinrichtungen erläutert werden, nämlich Ausführungsbeispiele von erfindungsgemäßen Zangenanordnungen (50). Diese Zangenanordnungen (50) können an jeder beliebigen Stelle der in Bezug auf Fig. 3 erläuterten Blasmaschine angeordnet sein, aber auch an geeigneter Stelle in anderen Behälterbehandlungsmaschinen sowie an Übergabebereichen zwischen hintereinander angeordneten Behälterbehandlungsmaschinen. So könnten die nachfolgend erläuterten Zangenanordnungen (50) zum Beispiel auch auf einem Übergaberad vorgesehen sein, das ausgangsseitig einer Blasmaschine und eingangsseitig einer Füllmaschine angeordnet ist. In analoger Weise ist eine Anordnung auf Übergaberädern zwischen beliebigen anderen Maschinen zur Behandlung von Vorformlingen oder zur Behandlung von aus Vorformlingen hergestellten Behältern realisierbar.

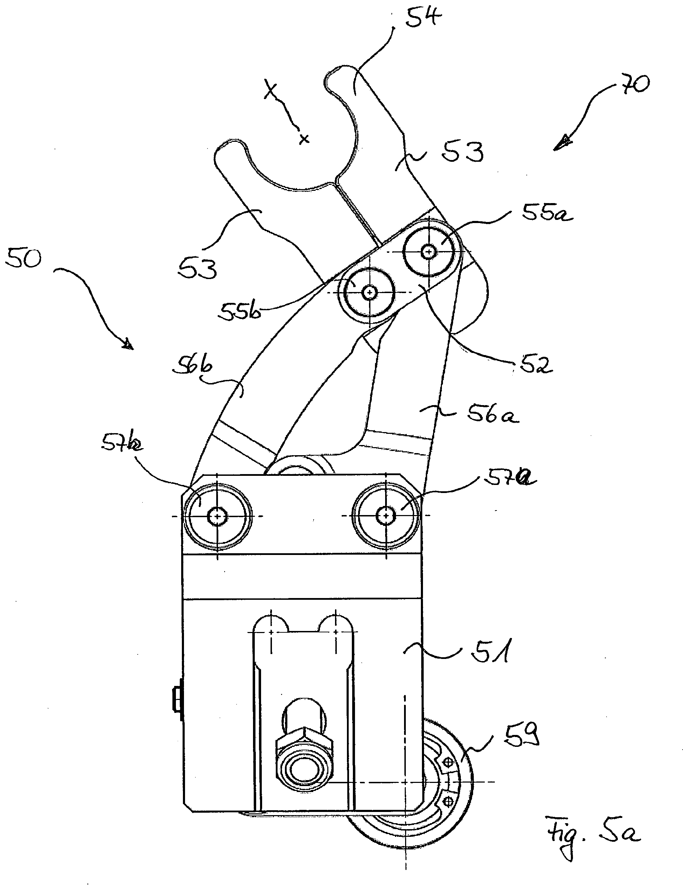

Fig. 5a zeigt in einer Aufsicht eine Zangenanordnung (50), die einen Zangenträger (51) aufweist. Dieser Zangenträger (51) kann zum Beispiel an einem Tragarm befestigt sein, wobei dieser Tragarm zum Beispiel auf einem der vorgenannten Übergaberäder angeordnet sein kann. Die Zangenanordnung (50) weist weiterhin eine Zangenbasis (52) auf. An dieser Zangenbasis (52) sind symmetrisch zu einer gemeinsamen Symmetrieachse zwei Zangenarme (53) angeordnet. Diese Zangenarme (53) weisen an ihrem einen Ende einen Greifbereich (54) auf, um zum Beispiel den Neckring eines Vorformlinges (1) oder eines Behälters (2) zu ergreifen. An dem dem Greifbereich (54) abgewandten Ende sind die Zangenarme (53) schwenkbar an der Zangenbasis (52) angelenkt. Es sind dazu zwei Schwenkachsen (55a) und (55b) vorgesehen, die einen gemeinsamen Mittenabstand aufweisen. Die geometrische Schwenkachse der Zangenarme (53) fällt mit der Achsmitte der mechanischen Schwenkachsen (55a) und (55b) zusammen, sodass der Mittenabstand der Schwenkachsen (55a, 55b) gleich dem Abstand der beiden geometrischen Schwenkachsen der Zangenarme (53) ist. Die Greifbereiche (54) der Zangenarme (53) umschließen nach innen hin einen Teilkreis mit einem Symmetriezentrum (X) dieses umschlossenen Bereiches. Bevorzugt fällt die Längsachse eines zum Beispiel von den Zangenarmen (53) gehaltenen Vorformlings (1) oder eines davon gehaltenen Behälters (2) mit diesem Symmetriezentrum (X) zusammen.

Die Zangenbasis (52) ist gelenkig mit dem Zangenträger (51) verbunden über einen ersten Schwenkhebel (56a) und über einen zweiten Schwenkhebel (56b). Die beiden genannten Schwenkhebel (56a, 56b) sind zangenträgerseitig mittels Schwenkachsen (57a) bzw. (57b) schwenkbar am Zangenträger (51) gelagert. Zangenbasisseitig sind die Schwenkhebel (56a) und (56b) an den Schwenkachsen (55a) bzw. (55b) an der Zangenbasis (52) angelenkt, wobei im gezeigten Ausführungsbeispiel die Schwenkachse (55a) und die Schwenkachse (55b) gleichzeitig als Schwenkachse für jeweils einen Zangenarm (53) und für einen Schwenkhebel (56a, 56b) fungieren. Es ist aber auch denkbar, für diese Schwenkbewegungen getrennte Schwenkachsen vorzusehen.

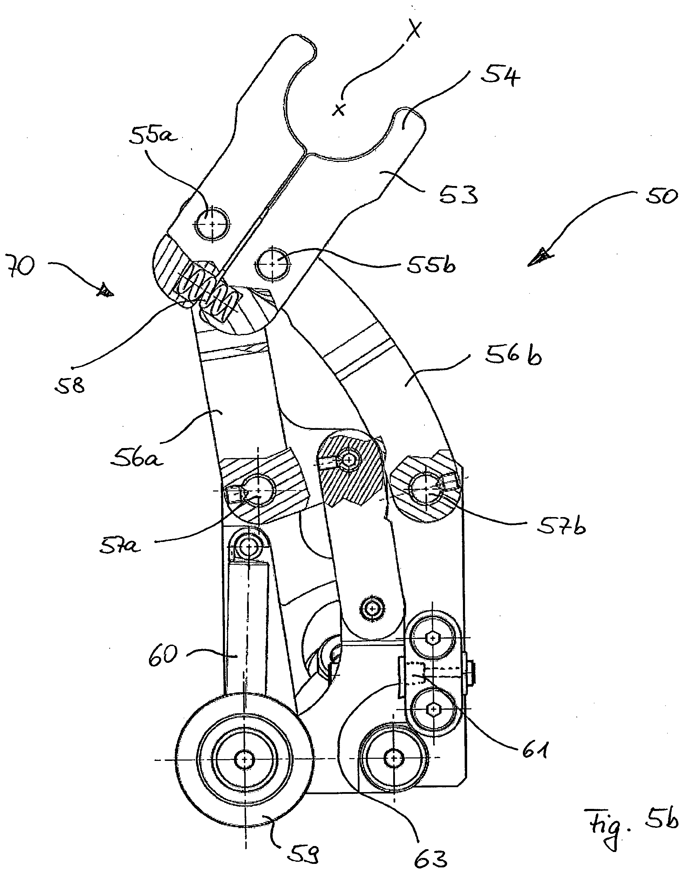

Aus der in Figur 5b dargestellten Ansicht von unten ist ersichtlich, dass die beiden Zangenarme (53) an ihren dem Greifbereich (54) gegenüberliegenden Enden durch eine dazwischenliegende Feder (58) in eine Grundposition vorgespannt sind. Gegen die Federkraft dieser Feder (58) kann zum Beispiel ein Vorformling (51) in den von den Greifbereichen (54) der Zangenarme (53) umschlossenen Raum hineingedrückt werden und dieser wird dann bei entsprechender Dimensionierung des Vorformlinges (1) klemmend von den Zangenarmen (53) gehalten.

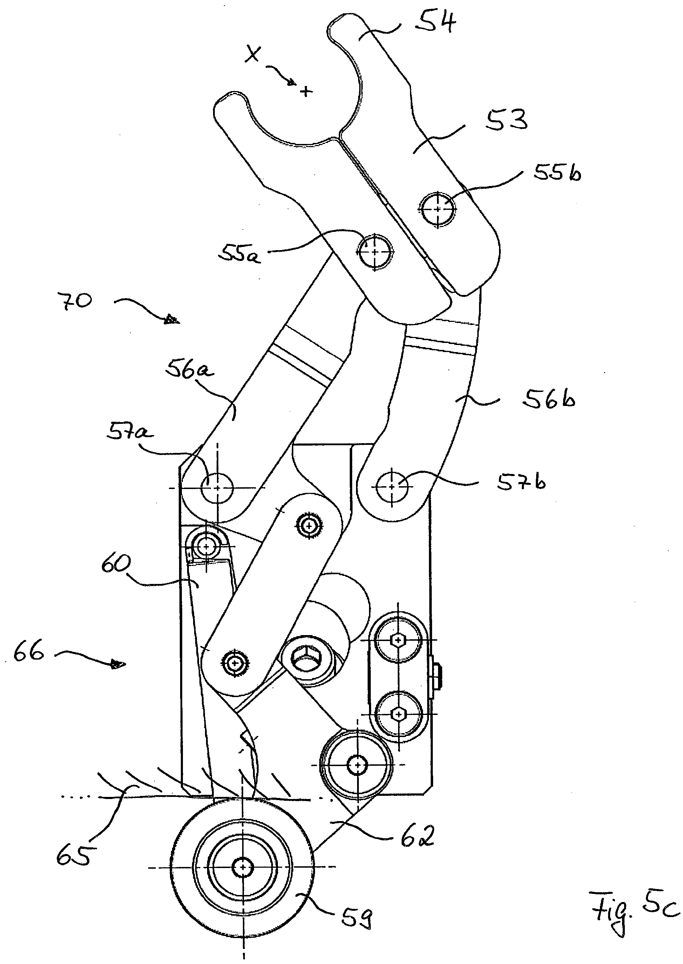

Die Figuren 5b und 5c zeigen jeweils in einer Ansicht von unten die Zangenanordnung (50) in zwei verschiedenen Stellungen. Figur 5b zeigt eine Ausgangsstellung der Zangenanordnung (50) und Figur 5c zeigt eine Endstellung der Zangenanordnung (50). Zu beachten ist, dass im dargestellten Ausführungsbeispiel sowohl in der Ausgangsstellung als auch in der Endstellung die Symmetrieachse (X) unverändert in ihrer Ortslage relativ zum Zangenträger (51) angeordnet ist.

Die Zangenbasis (52) bildet zusammen mit den Schwenkhebeln (56a) und (56b) und dem Zangenträger (51) ein Viergelenk (70) mit den vier Schwenkachsen (55a), (55b), (57a) und (57c). Die von den Zangenarmen (53) ausgeführte Schwenkbewegung ist bestimmt durch den Mittenabstand zwischen den Schwenkachsen (57a) und (57b), durch die Schwenkachsenlänge der Schwenkachse (56b), worunter der Mittenabstand zwischen den Schwenkachsen (57b) und (55b) zu verstehen ist, durch den Mittenabstand zwischen den Schwenkachsen (57a) und (55a) sowie durch den Mittenabstand zwischen den Schwenkachsen (55a) und (55b). Schließlich ist auch die Zangenarmlänge von Bedeutung bzw. der Achsabstand zwischen der Symmetrieachse (X) und der Schwenkachsenmitte der Schwenkachsen (55a) bzw. (55b).

Die Betätigung des Viergelenkes (70) erfolgt über eine externe Kurvensteuerung, wobei die Figuren 5a bis 5c mit Bezugszeichen (59) eine Kurvenrolle zeigen. Diese Kurvenrolle (59) arbeitet zusammen mit einer externen Steuerkurve (65), die allerdings nur in Figur 5c dargestellt ist.

Der Schwenkhebel (56a) ist über einen Kniehebelmechanismus (66) mit der Kurvenrolle (59) verbunden. In Figur 5c ist dieser Kniehebelmechanismus (66) in seiner Übertotpunktlage dargestellt. In dieser Übertotpunktlage ist das Viergelenk (70) lagefixiert, insbesondere da eine Feder (60) den Kniehebelmechanismus (66) in dieser Übertotpunktlage festhält. Es ist eine externe Kraft auf die Kurvenrolle (59) notwendig, um das Viergelenk (70) aus der in Figur 5c dargestellten Positionierung herauszubewegen.

In der in Figur 5b eingenommenen Positionierung des Viergelenkes (70) wirkt die gleiche Feder (60) ebenfalls positionsstabilisierend, da sie elongiert werden muss, um die Kurvenrolle (59) von der in Figur 5b gezeigten Position in die in Figur 5c gezeigten Position zu verschieben. Sowohl die in Figur 5b gezeigte Ausgangsposition als auch die in Figur 5c gezeigte Endposition sind somit rückstellgesichert ausgeführt. Die Rückstellsicherung erfolgt durch die Feder (60). Es sind auch andere Ausbildungen einer Rückstellsicherung denkbar.

Sowohl in der in Figur 5b als auch in der in Figur 5c dargestellten Positionierung des Viergelenkes (70) bewirkt die Feder (60), das ein Element der Zangenanordnung (50) zur Anlage gegen einen Anschlag kommt. Diesen Anschlag bildet im gezeigten Ausführungsbeispiel in Fig. 5b der Anschlagmagnet (61). Dieser Anschlagmagnet (61) hat die weitere Aufgabe, den Schwenkhebel (62), der zumindest in seinem Anschlagbereich (63) aus einem magnetisierbaren Material hergestellt ist, in der am Anschlagmagneten (61) anliegenden Position festzuhalten. Alternativ kann auch ein Anschlagkörper vorgesehen sein, in den ein Magnet zur Fixierung der Anschlagslage eingesetzt ist. Im vorliegenden Fall wirkt der Magnet zusätzlich zu der Kniehebelkonstruktion (66) und zu der Feder (60) lagestabilisierend. Konstruktionen ohne magnetische Lagestabilisierung sind ebenfalls denkbar, wie auch Konstruktionen nur mit magnetischer Lagestabiliserung, ggf. ergänzt um eine Stabilisierung durch eine Feder (60) und/oder durch einen Kniehebelmechanismus (66).

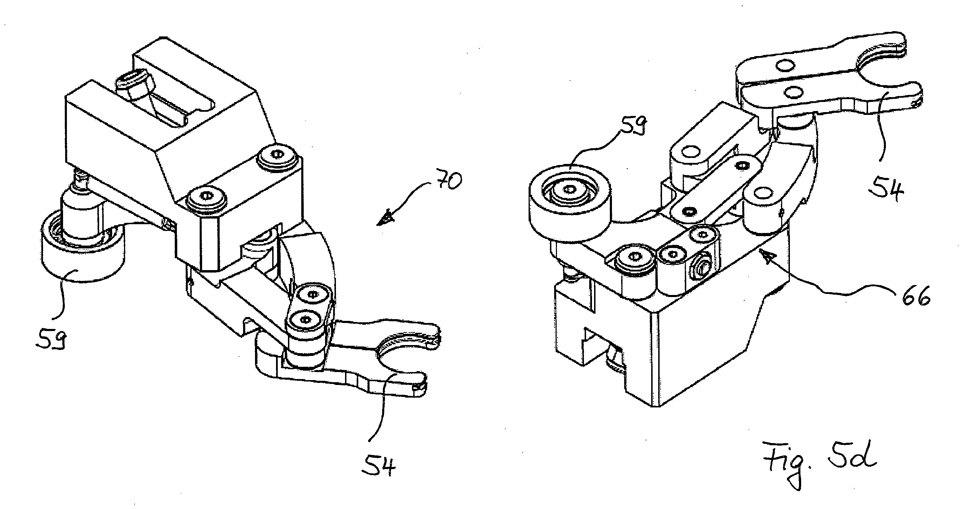

Figur 5d zeigt die beiden vorab zu den Figuren 5b und 5c beschriebenen Schwenkstellungen der Zangenanordnung in isometrischen Ansichten und macht die geometrischen Verhältnisse und die Anordnung der vorweg beschriebenen Elemente der Zangenanordnung des Ausführungsbeispieles deutlich.

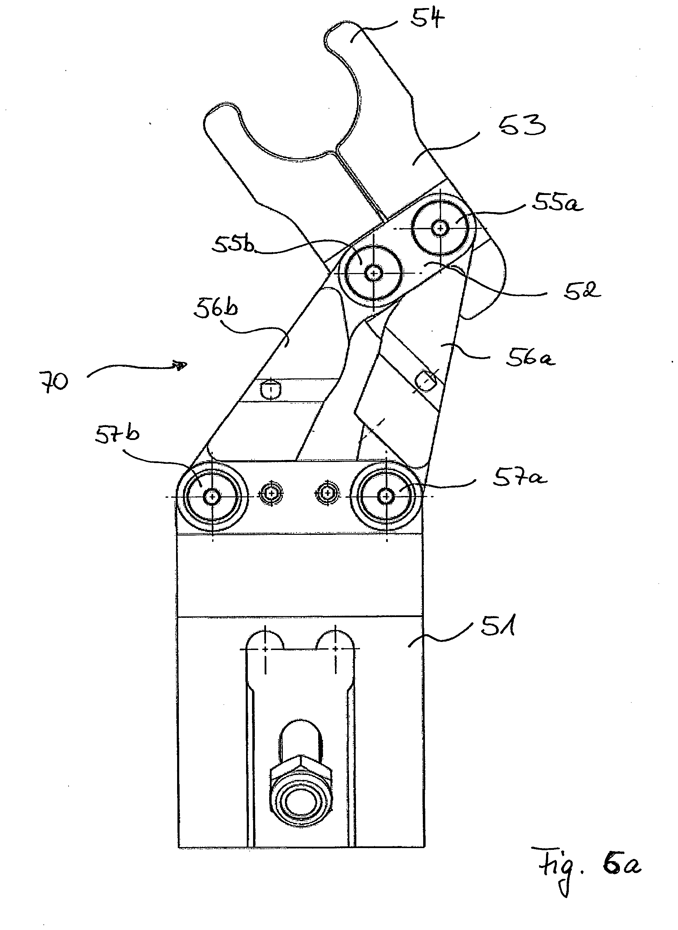

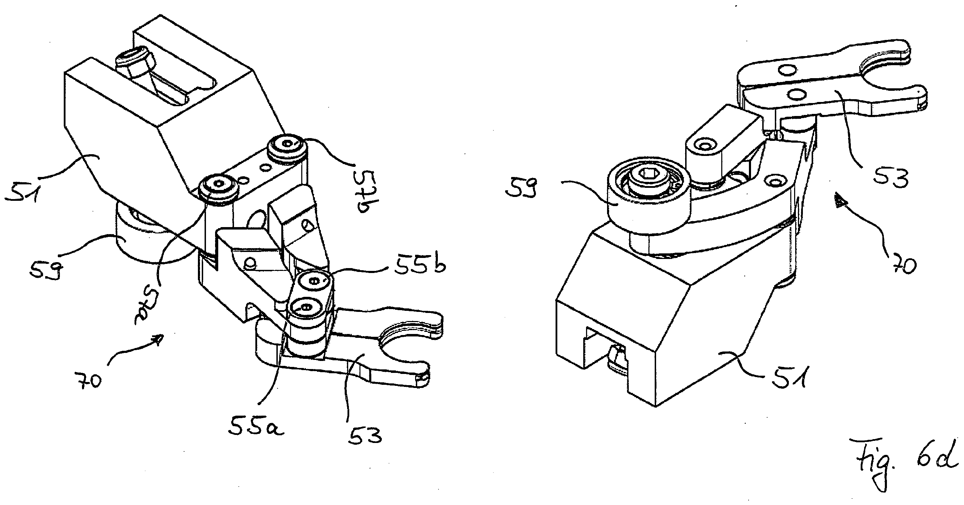

Die Figuren 6a bis 6c zeigen ein zweites Ausführungsbeispiel für eine erfindungsgemäße Zangenanordnung (50) in Ansichten analog zu den Figuren 5a bis 5c. Nachfolgend sollen lediglich diejenigen Änderungen beschrieben werden, die dieses zweite Ausführungsbeispiel von dem bereits beschriebenen ersten Ausführungsbeispiel unterscheiden. Dabei werden für gleiche Bauteile gleiche Bezugszeichen verwendet.

Die Zangenanordnung (50) der Figuren 6a bis 6c weist zur Stabilisierung der Ausgangsposition und der Endposition der Schwenkbewegung des Viergelenkes (70) weder eine Feder noch einen Kniehebelmechanismus mit Übertotpunktlage auf. Vielmehr ist bei dieser Ausführungsform vorgesehen, dass die Ausgangs- und die Endposition durch eine externe Kurvensteuerung und durch Anlage der Kurvenrolle (59) an einer externen Steuerkurve vorgegeben wird. Im Übrigen besteht konstruktive Übereinstimmung dahingehend, dass der Zangenträger (51) und die Zangenbasis (52) zwei Schenkel eines Viergelenkes (70) bilden. Zwischen Zangenträger (51) und Zangenbasis (52) erstrecken sich die beiden verbleibenden Schenkel des Viergelenkes (70) in Form von Schwenkhebeln (56a, 56b). Diese Schwenkhebel (56a) und (56b) sind dabei in der aus dem ersten Ausführungsbeispiel bekannten Weise zangenträgerseitig und zangenbasisseitig an Schwenkachsen (55a), (55b), (57a), (57b) gelenkig mit dem Zangenträger (51) bzw. mit der Zangenbasis (52) verbunden.

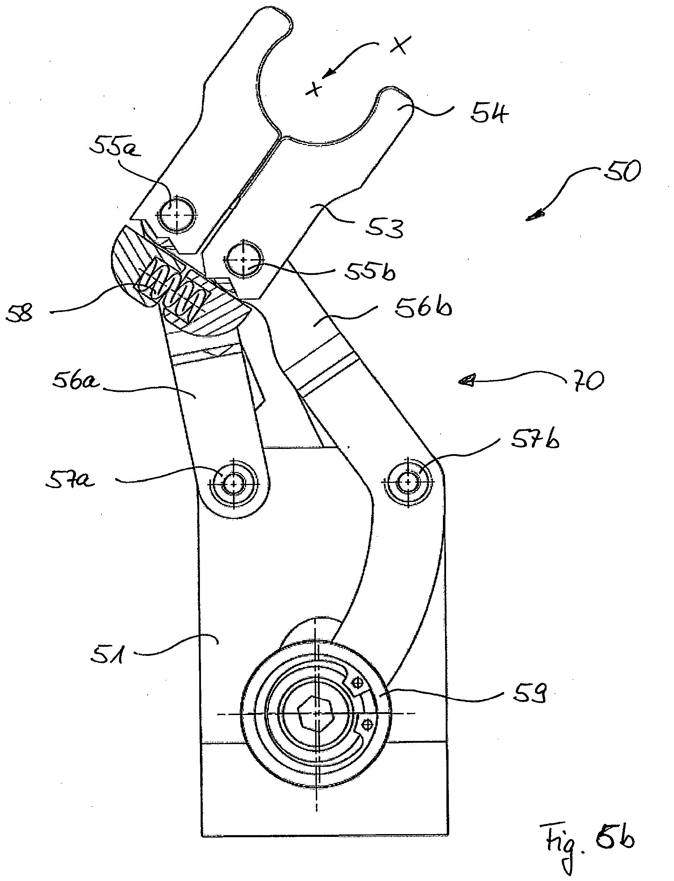

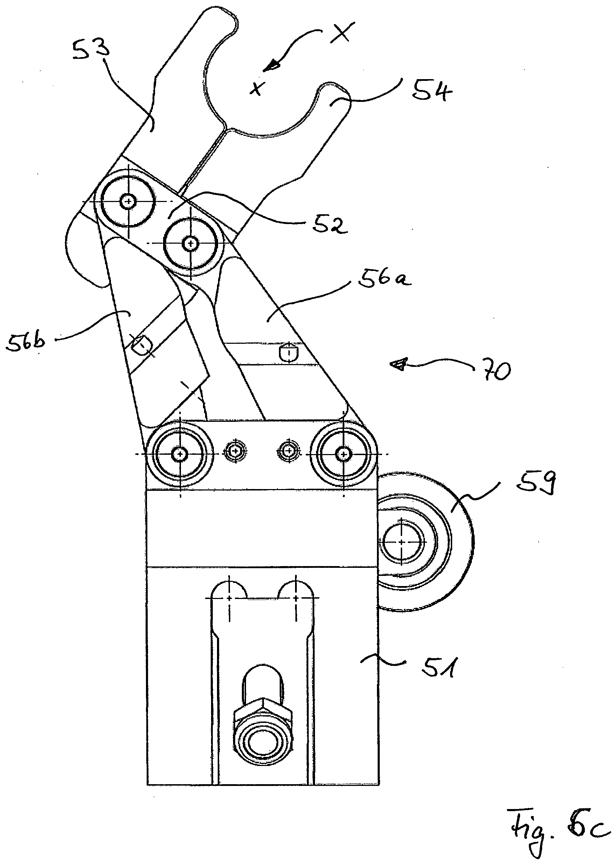

Figur dd zeigt die beiden vorab zu den Figuren 6b und 6c beschriebenen Schwenkstellungen der Zangenanordnung in isometrischen Ansichten und macht die geometrischen Verhältnisse und die Anordnung der vorweg beschriebenen Elemente der Zangenanordnung des zweiten Ausführungsbeispieles deutlich.

**Bezugszeichenliste**

| | | | |
|---|---|---|---|
| 1 | Vorformling | 35 | Eingaberad |
| 2 | Behälter | 36 | Umlenkrad |
| | | | |
| 3 | Blasstation | 37 | Entnahmerad |
| 4 | Blasform | 38 | Ausgaberad |
| 5, 6 | Formhälften | 39 | Kühlluftkanal |
| 7 | Bodenteil | 40 | Verriegelung |
| 8 | Hubvorrichtung | 42 | Tragarm |
| 9 | Transportdorn | 45 | Behälterbehandlungsmaschine, Blasmaschine |
| 10 | Anschlusskolben | 50 | Zangenanordnung |
| 11 | Reckstange | 51 | Zangenträger |
| 12 | Zylinder | 52 | Zangenbasis |
| 13 | Primärzylinder | 53 | Zangenarm |
| 14 | Vorformlingsboden | 54 | Greifbereich |
| 15 | Schlitten | 55a, 55b | Schwenkachse |
| 16 | Sekundärzylinder | 56a, 56b | Schwenkhebel |
| 17 | Führungsrolle | 57a, 57b | Schwenkachse |
| 18 | Führungselemente | 58 | Feder |
| 19, 20 | Blasformträger | 59 | Abnehmer |
| 21 | Mündungsabschnitt | 60 | Feder |
| 22 | Gewindeeinsatz | 61 | Magnet |
| 23 | Behälterblase | 62 | Schwenkhebel |
| 24 | Heizstrecke | 63 | Anschlagbereich |
| 25 | Blasrad | 65 | externe Steuerkurve |
| 26 | Vorformlingseingabe | 66 | Kniehebel |
| 27-29 | Übergaberad | 70 | Viergelenk |
| 30 | Heizstrahler | | |
| 31 | Gebläse | | |
| 32 | Ausgabestrecke | | |
| 33 | Transportelement | | |
| 34 | Umlenkrad | | |
| 70 | | | |

## Patentansprüche

1. Zangenanordnung (50) für die Handhabung von Vorformlingen (1) aus einem thermoplastischen Material oder von daraus hergestellten Behältern (2), umfassend eine Zangenbasis (52) mit wenigstens zwei daran schwenkbar befestigten Zangenarmen (53) sowie mit einem die Zangenbasis (52) tragenden Zangenträger (51), **dadurch gekennzeichnet, dass** die Zangenbasis (52) mittels eines Viergelenks (70) mit dem Zangenträger (51) verbunden ist, wobei die Zangenbasis (52) und der Zangenträger (51) als jeweils gegenüberliegende Schenkel des Viergelenks (70) ausgebildet sind, und wobei das Viergelenk (70) insbesondere durch zwei Schwenkarme (56a, 56b) gleicher Länge komplettiert ist.

2. Zangenanordnung (50) nach Anspruch 1, **dadurch gekennzeichnet, dass** die Zangenanordnung (50) wenigstens einen Anschlag (61, 63) zur einseitigen Begrenzung einer Schwenkbewegung des Viergelenks (70) aufweist zur Vorgabe einer definierten Sollposition der Zangenarme (53).

3. Zangenanordnung (50) nach Anspruch 2, **dadurch gekennzeichnet, dass** die Zangenanaordnung (50) eine Rückstellsicherung (61, 63, 66, 60) aufweist zum Halten des Viergelenkes (70) in der Anschlagposition, wobei diese Rückstellsicherung insbesondere als Magnet (61) und/oder als Kniehebel (66) z.B. in Übertotpunktlage ausgebildet ist

4. Zangenanordnung (50) nach einem der Ansprüche 2 oder 3, **dadurch gekennzeichnet, dass** die Zangenanordnung (50) einen beidseitigen Anschlag oder zwei einseitige Anschläge aufweist zur Vorgabe von zwei definierten Sollpositionen der Zangenarme (53).

5. Zangenanordnung (50) nach einem der vorhergehenden Ansprüche, **dadurch gekennzeichnet, dass** die von der Zangenbasis (52) und von dem Zangenträger (51) gebildeten Schenkel unterschiedlich lang ausgebildet sind.

6. Zangenanordnung (50) nach Anspruch 5, **dadurch gekennzeichnet, dass** der von der Zangenbasis (52) gebildete Schenkel kürzer ausgebildet ist als der von dem Zangenträger (51) gebildete Schenkel.

7. Zangenanordnung (50) nach einem der vorhergehenden Ansprüche, **dadurch gekennzeichnet, dass** die Schwenkachsen (55a, 55b) der Zangenarme (53) von den Schwenkachsen des Viergelenks (70) auf der Zangenbasis (52) gebildet sind.

8. Zangenanordnung (50) nach einem der vorhergehenden Ansprüche, **dadurch gekennzeichnet, dass** die Zangenanordnung (50) kurvengesteuert ausgeführt ist und ein Steuerelement aufweist, insbesondere einen Abnehmer (59), für das Zusammenwirken mit einer externen Kurvensteuerung, insbesondere mit einer externen Steuerkurve (65), wobei die Schwenkbewegung des Viergelenks (70) wenigstens in einer Richtung kurvengesteuert ausführbar ist.

9. Zangenanordnung (50) nach Anspruch 8, **dadurch gekennzeichnet, dass** die Zangenanordnung (50) für die Ausführung einer Schwenkbewegung des Viergelenks (70) in der anderen Richtung eine Rückstellvorrichtung aufweist, die insbesondere als Feder (60) ausgebildet ist.

10. Zangenanordnung (50) nach Anspruch 8, **dadurch gekennzeichnet, dass** die Zangenanordnung (50) zur kurvengesteuerten Ausführung einer Schwenkbewegung des Viergelenks (70) in der anderen Richtung ausgebildet ist.

11. Transferrad (27, 28, 29, 35, 37, 38) zur Handhabung von Vorformlingen (1) aus einem thermoplastischen Material oder von daraus hergestellten Behältern (2), mit wenigstens einem Tragarm (42) und mit wenigstens einer an dem Tragarm (42) befestigten Zangenanordnung (50) nach einem der vorgehenden Ansprüche.

12. Behälterbehandlungsmaschine, insbesondere Blasmaschine (45) und/oder Beschichtungsmaschine und/oder Etikettiermaschine und/oder Füller, mit einem Transferrad (27, 28, 29, 35, 37, 38) nach Anspruch 11.

## Claims

1. A tong assembly (50) for handling preforms (1) made of a thermoplastic material or containers (2) produced therefrom, comprising a tong base (52) comprising at least two tong arms (53) pivotably fastened thereto, as well as comprising a tong support (51) supporting the tong base (52), **characterised in that** the tongue base (52) is connected to the tong support (51) by means of a four joint (70), wherein the tong base (52) and the tong support (51) are each formed as opposite legs of the four joint (70), and wherein the four joint (70) is in particular complemented by two swivel arms (56a, 56b) of equal length.

2. The tong assembly (50) according to claim 1, **characterised in that** the tong assembly (50) has at least one stop (61, 63) for one-sided limitation of a pivoting movement of the four joint (70) for specifying a defined target position of the tong arms (53).

3. The tong assembly (50) according to claim 2, **characterised in that** the tong assembly (50) has a reset protection (61, 63, 66, 60) for holding the four joint (70) in the stop position, wherein this reset protection is in particular formed as magnet (61) and/or as toggle lever (66), e.g. in top dead centre position.

4. The tong assembly (50) according to any one of claims 2 or 3, **characterised in that** the tong assembly (50) has a two-sided stop or two one-sided stops for specifying two defined target positions of the tong arms (53).

5. The tong assembly (50) according to any one of the preceding claims, **characterised in that** the legs formed by the tong base (52) and by the tong support (51) are formed of differing lengths.

6. The tong assembly (50) according to claim 5, **characterised in that** the leg formed by the tong base (52) is formed to be shorter than the leg formed by the tong support (51).

7. The tong assembly (50) according to any one of the preceding claims, **characterised in that** the pivot axes (55a, 55b) of the tong arms (53) are formed by the pivot axes of the four joint (70) on the tong base (52).

8. The tong assembly (50) according to any one of the preceding claims, **characterised in that** the tong assembly (50) is embodied in a cam-controlled manner and has a control element, in particular a consumer (59), for the cooperation with an external cam control, in particular with an external control cam (65), wherein the pivoting movement of the four joint (70) can be carried out in a cam-controlled manner at least in one direction.

9. The tong assembly (50) according to claim 8, **characterised in that** the tong assembly (50) has a resetting device, which is in particular formed as spring (60), for carrying out a pivoting movement of the four joint (70) in the other direction.

10. The tong assembly (50) according to claim 8, **characterised in that** the tong assembly (50) is formed for carrying out a pivoting movement of the joint (70) in a cam-controlled manner in the other direction.

11. A transfer wheel (27, 28, 29, 35, 37, 38) for handling preforms (1) made of a thermoplastic material or containers (2) produced therefrom, comprising at least one support arm (42) and comprising at least one tong assembly (50) according to any one of the preceding claims fastened to the support arm (42)

12. A container treatment machine (45), in particular blowing machine (45), and/or coating machine and/or labelling machine and/or filler, comprising a transfer wheel (27, 28, 29, 35, 37, 38) according to claim 11.

## Revendications

1. Dispositif à pince (50) pour la manipulation de préformes (1) en matériau thermoplastique ou de récipients (2) fabriqués à partir de celles-ci, comprenant une base de pince (52) avec au moins deux branches de pince (53) qui y sont fixées de façon à pouvoir pivoter, ainsi qu'un support de pince (51) portant la base de pince (52), **caractérisé en ce que** la base (52) de la pince est reliée au support de pince (51) au moyen d'un quadrilatère articulé (70), la base (52) de la pince et le support de pince (51) formant respectivement des côtés opposés du quadrilatère articulé (70) et celui-ci étant notamment complété par deux bras pivotants (56a, 56b) de même longueur.

2. Dispositif à pince (50) selon la revendication 1, **caractérisé en ce que** le dispositif à pince (50) présente au moins une butée (61, 63) pour limiter unilatéralement un mouvement de pivotement du quadrilatère articulé (70) pour définir une position de consigne des branches de pince (53).

3. Dispositif à pince (50) selon la revendication 2, **caractérisé en ce que** le dispositif à pince (50) présente un dispositif anti-retour (61, 63, 66, 60) pour maintenir le quadrilatère articulé (70) en position de butée, ce dispositif anti-retour étant notamment réalisé sous forme d'aimant (61) et/ou de levier coudé (66) par ex. en dépassement du point de basculement.

4. Dispositif à pince (50) selon l'une des revendications 2 ou 3, **caractérisé en ce que** le dispositif à pince (50) présente une butée bilatérale ou deux butées unilatérales pour définir deux positions de consigne des branches de pince (53).

5. Dispositif à pince (50) selon l'une des revendications précédentes, **caractérisé en ce que** les côtés formés par la base (52) de la pince et le support de pince (51) sont de longueur différente.

6. Dispositif à pince (50) selon la revendication 5, **caractérisé en ce que** le côté formé par la base (52) de la pince est plus court que celui formé par le support de pince (51).

7. Dispositif à pince (50) selon l'une des revendications précédentes, **caractérisé en ce que** les axes de pivotement (55a, 55b) des branches de pince (53) sont formées par les axes de pivotement du quadrilatère articulé (70) sur la base (52) de la pince.

8. Dispositif à pince (50) selon l'une des revendications précédentes, **caractérisé en ce que** le dispositif à pince (50) est commandé par cames et présente un élément de commande, notamment un suiveur (59) pour assurer l'action conjointe avec une commande à came externe, notamment avec une came de commande (65) externe, le mouvement de pivotement du quadrilatère articulé (70) pouvant être commandé dans au moins un sens par une came.

9. Dispositif à pince (50) selon la revendication 8, **caractérisé en ce que** le dispositif à pince (50) présente un dispositif de rappel pour l'exécution d'un mouvement de pivotement du quadrilatère articulé (70) dans l'autre sens, ce dispositif étant notamment réalisé sous forme de ressort (60).

10. Dispositif à pince (50) selon la revendication 8, **caractérisé en ce que** le dispositif à pince (50) est conçu pour l'exécution d'un mouvement de pivotement du quadrilatère articulé (70) commandé par came dans l'autre sens.

11. Roue de transfert (27, 28, 29, 35, 37, 38) pour la manipulation de préformes (1) en matériau thermoplastique ou de récipients (2) fabriqués à partir de celles-ci, avec au moins un bras de support (42) et au moins un dispositif à pince (50) selon l'une des revendications précédentes fixé au bras de support (42).

12. Machine de traitement de récipients, notamment une machine de moulage par soufflage (45) et/ou une machine de revêtement et/ou une machine d'étiquetage et/ou une machine de remplissage, avec une roue de transfert (27, 28, 29, 35, 37, 38) selon la revendication 11.
